# DEMANDE DE BREVET EUROPEEN

(11) **EP 4 005 746 A1**
(43) Date de publication de la demande: **01.06.2022**
(21) Numéro de dépôt: 21210125.7
(22) Date de dépôt: 24.11.2021
(51) Int. Cl.: B25J 9/16, G05B 19/425

(54) **SYSTÈME ET PROCÉDÉ D APPRENTISSAGE DE MOUVEMENT POUR PROGRAMMER AU MOINS UN DISPOSITIF ROBOTISÉ**

(30) Priorité: 30.11.2020 FR 2012363
(71) Demandeur: MBDA France, 92350 Le Plessis-Robinson (FR)
(72) Inventeur: GAUTIER, Nicolas, 92350 Le Plessis-Robinson (FR); MORISSET, Bruno, 92350 Le Plessis-Robinson (FR); RAFIN, Vincent, 92350 Le Plessis-Robinson (FR)
(74) Mandataire: Gevers & Orès

(57) **Abrégé**

- Système et procédé d'apprentissage de mouvement pour programmer au moins un dispositif robotisé.
- Le système comprend un module de mémorisation (5) d'espace de travail (3), au moins un pointeur (6) associé respectivement à un effecteur (4) d'un dispositif robotisé (2), un module de capture de trajectoire (8) réalisée par le ou les pointeurs (6), un module de post-traitement (10) pour déterminer une trajectoire compatible du ou des effecteurs (4) et un module de sauvegarde (11), configuré pour sauvegarder la trajectoire compatible de chacun des dispositifs robotisés (2).

## Description

### DOMAINE TECHNIQUE

La présente invention concerne le domaine de la robotique. En particulier, elle concerne un système et un procédé d'apprentissage de mouvement pour programmer au moins un dispositif robotisé.

### ÉTAT DE LA TECHNIQUE

Un système robotisé est généralement chargé d'opérations répétitives ou non répétitives à réaliser. L'utilisateur d'un système robotisé ne dispose pas forcément de connaissances en robotique industrielle pour mettre en œuvre un système robotisé.

Il existe déjà des systèmes de programmation robotique par capture de mouvements (système PRCM) associés au système robotisé qui permettent à un utilisateur de programmer un système robotisé sans connaissances en robotique. Pour programmer le système robotisé, l'utilisateur se saisit d'un dispositif d'apprentissage appartenant à un système PRCM. Ce dispositif d'apprentissage est muni d'un dispositif de pointage, adapté à l'application à réaliser par le système robotisé, que l'utilisateur déplace dans l'espace de travail du système robotisé afin d'enregistrer un mouvement. Le document US 2019/0086907 décrit un tel système PRCM dans lequel le dispositif d'apprentissage est le dispositif robotisé lui-même. Toutefois, la solution présentée dans ce document n'est pas complètement satisfaisante.

### EXPOSÉ DE L'INVENTION

La présente invention a pour objet de pallier les inconvénients de l'art antérieur en proposant un système d'apprentissage de mouvement pour programmer au moins un dispositif robotisé formant un système robotisé.

À cet effet, l'invention concerne un système d'apprentissage de mouvement pour programmer au moins un dispositif robotisé équipé d'au moins un effecteur et présentant au moins un degré de liberté de mouvement, le ou les dispositifs robotisés étant destinés à évoluer dans un espace de travail.

Selon l'invention, le système comprend :
- un module de mémorisation d'espace de travail, configuré pour mémoriser des paramètres représentatifs de l'espace de travail ;
- au moins un pointeur, le pointeur ou chacun des pointeurs étant associé respectivement à un effecteur d'un dispositif robotisé, le pointeur ou chacun des pointeurs étant configuré pour être entraîné par au moins un utilisateur selon une trajectoire qui est destinée à être réalisée dans l'espace de travail par l'effecteur ou chacun des effecteurs, le pointeur ou chacun des pointeurs étant représentatif d'une ou de fonctions à réaliser par le ou les effecteurs auxquels le pointeur ou chacun des pointeurs est associé ;
- un module de capture de trajectoire configuré pour mémoriser la trajectoire réalisée par le pointeur ou par chacun des pointeurs ainsi que pour mémoriser des paramètres de la trajectoire réalisée par le pointeur ou par chacun des pointeurs ;
- un module de post-traitement, configuré pour déterminer pour chacun des dispositifs robotisés :
   - une trajectoire compatible du ou des effecteurs avec le ou les degrés de liberté de mouvement du dispositif robotisé ou de chacun des dispositifs robotisés à partir de la trajectoire réalisée par le pointeur ou par chacun des pointeurs mémorisée par le module de capture de trajectoire et
   - des paramètres compatibles de ladite trajectoire compatible du ou des l'effecteurs à partir des paramètres mémorisés par le module de capture de trajectoire ;
- un module de sauvegarde, configuré pour sauvegarder la trajectoire compatible et les paramètres compatibles du dispositif robotisé (2) ou de chacun des dispositifs robotisés.

Ainsi, grâce à l'invention, un utilisateur peut facilement et rapidement programmer un ou plusieurs dispositifs robotisés d'un système robotisé. Le module de post-traitement permet en outre de s'assurer que les trajectoires soient compatibles avec le ou les dispositifs robotisés.

Avantageusement, le système d'apprentissage comprend en outre un module de génération de programme, configuré pour générer et sauvegarder un programme à partir de la trajectoire compatible et des paramètres compatibles sauvegardés par le module de sauvegarde, le programme présentant un langage compatible avec un langage permettant une mise en mouvement du ou des dispositifs robotisés.

De plus, le système d'apprentissage comprend un module de visualisation de la trajectoire, configuré pour visualiser la trajectoire réalisée par le pointeur ou par chacun des pointeurs par rapport aux paramètres représentatifs de l'espace de travail.

Grâce au module de visualisation, l'utilisateur peut s'assurer que les trajectoires qu'il programme sont compatibles avec l'espace de travail.

En outre, le module de post-traitement comprend :
- un premier sous-module d'affichage, configuré pour afficher des points de la trajectoire réalisée par le pointeur ou par chacun des pointeurs et mémorisée par le module de capture de trajectoire ;
- un deuxième sous-module d'affichage, configuré pour afficher l'espace de travail à partir des paramètres représentatifs de l'espace de travail mémorisés par le module de mémorisation ;
- un troisième sous-module d'affichage, configuré pour afficher les paramètres de la trajectoire réalisée par le pointeur ou par chacun des pointeurs et mémorisés par le module de capture de trajectoire ;
- un sous-module de saisie, configuré pour permettre à un utilisateur de modifier des points de la trajectoire mémorisée par le module de capture de trajectoire et/ou modifier les paramètres de la trajectoire mémorisés par le module de capture de trajectoire pour obtenir ladite trajectoire compatible pour l'effecteur ou pour chacun des effecteurs du dispositif robotisé ou de chacun des dispositifs robotisés et/ou lesdits paramètres compatibles.

De plus, le module de post-traitement comprend un sous-module de simulation, configuré pour simuler ladite trajectoire compatible de l'effecteur ou de chacun des effecteurs du dispositif robotisé ou des dispositifs robotisés ainsi que l'espace de travail à partir des paramètres représentatifs de l'espace de travail.

Avantageusement, le sous-module de simulation comprend une unité de simulation en réalité augmentée.

Par ailleurs, le module de post-traitement comprend un sous-module de reproduction, configuré pour transmettre au dispositif robotisé ou aux dispositifs robotisés des ordres de commande représentatifs de la trajectoire du pointeur ou de chacun des pointeurs, pour que le ou les effecteurs du dispositif robotisé ou de chacun des dispositifs robotisés reproduisent de façon simultanée la trajectoire du pointeur ou de chacun des pointeurs entraîné par le ou les utilisateurs, pour obtenir ladite trajectoire compatible pour l'effecteur ou pour chacun des effecteurs du dispositif robotisé ou de chacun des dispositifs robotisés et/ou lesdits paramètres compatibles.

Selon un premier mode de réalisation, le module de visualisation comprend un sous-module de simulation en réalité augmentée.

Selon un deuxième mode de réalisation, le module de visualisation comprend un sous-module d'alerte, configuré pour alerter l'utilisateur d'une trajectoire incompatible du pointeur ou d'au moins un des pointeurs, la trajectoire étant incompatible si le ou les degrés de liberté du ou des dispositifs robotisés ne permettent pas une réalisation de ladite trajectoire par le ou les effecteurs auxquels le ou les pointeurs sont associés.

Avantageusement, le sous-module d'alerte est configuré pour alerter l'utilisateur d'une trajectoire incompatible du pointeur ou d'au moins un des pointeurs par rapport aux paramètres représentatifs de l'espace de travail dans lequel le ou les dispositifs robotisés sont destinés à évoluer.

L'invention concerne également un système robotisé.

Selon l'invention, le système robotisé comprend :
- au moins un dispositif robotisé équipé d'au moins un effecteur et présentant au moins un degré de liberté de mouvement,
- un système d'apprentissage tel que décrit ci-dessus,
- un module d'exécution, configuré pour faire exécuter par le dispositif robotisé ou par chacun des dispositifs robotisés la trajectoire compatible et les paramètres compatibles sauvegardés par le module de sauvegarde.

L'invention concerne également un procédé d'apprentissage de mouvement pour programmer au moins un dispositif robotisé équipé d'au moins un effecteur et présentant au moins un degré de liberté de mouvement, le ou les dispositifs robotisés étant destinés à évoluer dans un espace de travail,

Selon l'invention, le procédé comprend les étapes suivantes :
- une étape de mémorisation, mise en œuvre par un module de mémorisation d'espace de travail, consistant à mémoriser des paramètres représentatifs de l'espace de travail dans lequel le ou les dispositifs robotisés sont destinés à évoluer ;
- au moins une étape d'entraînement d'au moins un pointeur, mise en œuvre par au moins un utilisateur, le ou les utilisateurs entraînant au moins un pointeur associé respectivement à un effecteur d'un dispositif robotisé, le pointeur ou chacun des pointeurs étant entraîné par le ou les utilisateurs selon une trajectoire qui est destinée à être réalisée dans l'espace de travail par l'effecteur ou par chacun des effecteurs, le pointeur ou chacun des pointeurs étant représentatif d'une ou de fonctions à réaliser du ou des effecteurs auxquels le pointeur ou chacun des pointeurs est associé ;

- une étape de capture de trajectoire, mise en œuvre par un module de capture de trajectoire, consistant à mémoriser la trajectoire réalisée par le pointeur ou par chacun des pointeurs ainsi que pour mémoriser des paramètres de la trajectoire réalisée par le pointeur ou par chacun des pointeurs ;
- une étape de post-traitement, mise en œuvre par un module de post-traitement, consistant à déterminer pour chacun des dispositifs robotisés :
   - une trajectoire compatible du ou des effecteurs avec le ou les degrés de liberté de mouvement du dispositif robotisé ou de chacun des dispositifs robotisés à partir de la trajectoire réalisée par le pointeur ou par chacun des pointeurs mémorisée dans l'étape de capture de trajectoire et
   - des paramètres compatibles de ladite trajectoire compatible du ou des effecteurs à partir des paramètres mémorisés dans l'étape de capture de trajectoire ;
- une étape de sauvegarde, mise en œuvre par un module de sauvegarde, consistant à sauvegarder la trajectoire compatible et les paramètres compatibles du dispositif robotisé ou de chacun des dispositifs robotisés.

Avantageusement, le procédé comprend en outre une étape de génération de programme, mise en œuvre par un module de génération de programme, consistant à générer et à sauvegarder un programme à partir de la trajectoire compatible et des paramètres compatibles sauvegardés par le module de sauvegarde, le programme présentant un langage compatible avec un langage permettant une mise en mouvement du ou des dispositifs robotisés.

De plus, le procédé d'apprentissage comprend une étape de visualisation de la trajectoire, mise en œuvre par un module de visualisation de la trajectoire, consistant à visualiser la trajectoire réalisée par le pointeur ou par chacun des pointeurs par rapport aux paramètres représentatifs de l'espace de travail.

En outre, l'étape de post-traitement comprend :
- une première sous-étape d'affichage, mise en œuvre par un premier sous-module d'affichage, consistant à afficher des points de la trajectoire réalisée par le pointeur ou par chacun des pointeurs ;
- une deuxième sous-étape d'affichage, mise en œuvre par un deuxième sous-module d'affichage, consistant à afficher l'espace de travail à partir des paramètres représentatifs de l'espace de travail mémorisés à l'étape de mémorisation ;
- une troisième sous-étape d'affichage, mise en œuvre par un deuxième sous-module d'affichage, consistant à afficher les paramètres de la trajectoire réalisée par le pointeur ou par chacun des pointeurs ;
- une sous-étape de saisie, mise en œuvre par un sous-module de saisie, consistant à permettre à un utilisateur de modifier des points de la trajectoire mémorisée dans l'étape de capture de trajectoire et/ou modifier les paramètres de la trajectoire mémorisés dans l'étape de capture de trajectoire pour obtenir ladite trajectoire compatible pour l'effecteur ou pour chacun des effecteurs du dispositif robotisé ou de chacun des dispositifs robotisés et/ou lesdits paramètres compatibles.

De plus, l'étape de post-traitement comprend une sous-étape de simulation, mise en œuvre par un sous-module de simulation, consistant à simuler ladite trajectoire compatible de l'effecteur ou de chacun des effecteurs du dispositif robotisé ou des dispositifs robotisés ainsi que l'espace de travail à partir des paramètres représentatifs de l'espace de travail.

Par ailleurs, l'étape de post-traitement comprend une sous-étape de reproduction, mise en œuvre par un sous-module de reproduction, consistant à transmettre au dispositif robotisé ou aux dispositifs robotisés des ordres de commande représentatifs de la trajectoire du pointeur ou de chacun des pointeurs, pour que le ou les effecteurs du dispositif robotisé ou de chacun des dispositifs robotisés reproduisent de façon simultanée la trajectoire du pointeur ou de chacun des pointeurs entraîné par le ou les utilisateur, pour obtenir ladite trajectoire compatible pour l'effecteur ou pour chacun des effecteurs du dispositif robotisé ou de chacun des dispositifs robotisés et/ou lesdits paramètres compatibles.

Selon le premier mode de réalisation, l'étape de visualisation comprend une sous-étape d'alerte, mise en œuvre par un sous-module d'alerte, consistant à alerter l'utilisateur d'une trajectoire incompatible du pointeur ou d'au moins un des pointeurs, la trajectoire étant incompatible si le ou les degrés de liberté du ou des dispositifs robotisés ne permettent pas une réalisation de ladite trajectoire par le ou les dispositifs robotisés auxquels le ou les pointeurs sont associés.

Selon le deuxième mode de réalisation, la sous-étape d'alerte consiste à alerter l'utilisateur d'une trajectoire incompatible du pointeur ou d'au moins un des pointeurs par rapport aux paramètres représentatifs de l'espace de travail dans lequel le ou les dispositifs robotisés sont destinés à évoluer.

### BRÈVE DESCRIPTION DES FIGURES

L'invention, avec ses caractéristiques et avantages, ressortira plus clairement à la lecture de la description faite en référence aux dessins annexés dans lesquels :
La figure 1 représente une vue schématique du système robotisé, d'un utilisateur et du système d'apprentissage.
La figure 2 représente une vue schématique de dispositifs robotisés dans un espace de travail.
La figure 3a représente schématiquement un dispositif robotisé sans pointeur.
La figure 3b représente schématiquement un dispositif robotisé comportant un pointeur.
La figure 4 représente une vue schématique d'un utilisateur portant plusieurs pointeurs.
La figure 5 représente schématiquement le procédé d'apprentissage.
La figure 6 représente schématiquement un mode de réalisation d'une mise en œuvre du système d'apprentissage.

### DESCRIPTION DÉTAILLÉE

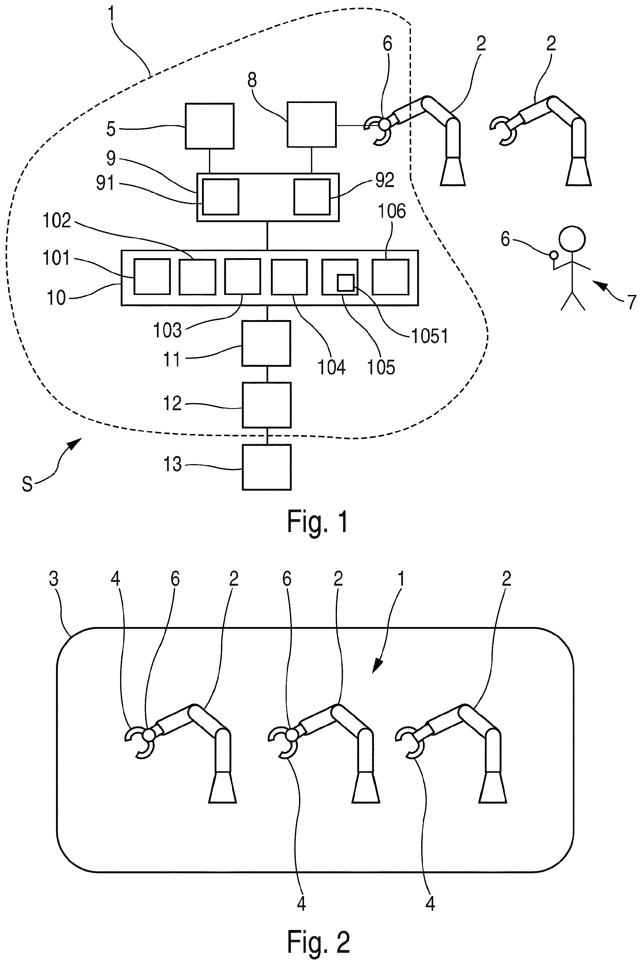

Le système d'apprentissage 1 de mouvement est représenté sur la figure 1.

Le système d'apprentissage peut être utilisé dans le domaine industriel.

De façon non limitative, le système d'apprentissage 1 peut également être utilisé dans le domaine du divertissement tel que dans le domaine des sports, du cinéma, des parcs d'attraction ou des consoles de jeu. Par exemple, le système d'apprentissage 1 peut être utilisé pour des événements dans lesquels des intervenants sont situés à distance les uns des autres.

Le système d'apprentissage est destiné à programmer au moins un dispositif robotisé 2 équipé d'au moins un effecteur 4. Le dispositif robotisé 2 ou chacun des dispositifs robotisés 2 présente au moins un degré de liberté de mouvement. Le ou les dispositifs robotisés 2 étant destinés à évoluer dans un espace de travail 3.

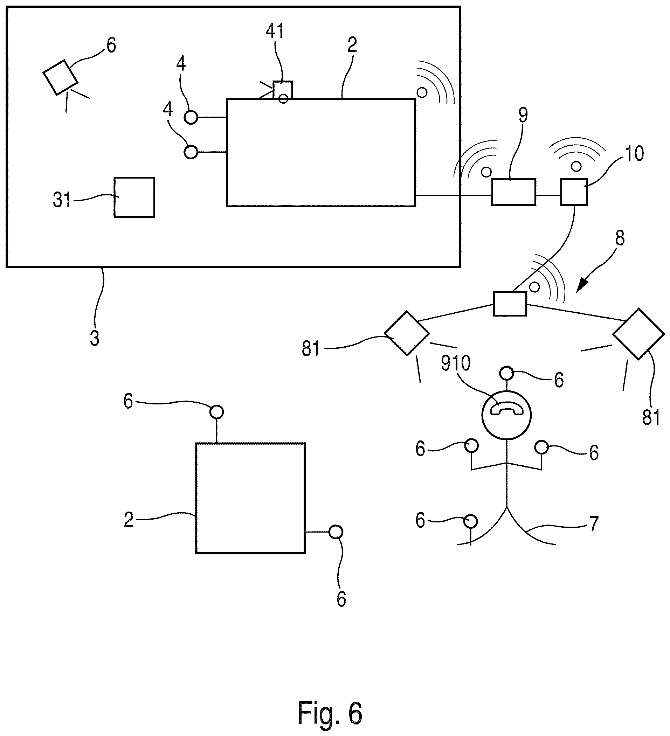

Les dispositifs robotisés représentés sur la figure 1, la figure 2, la figure 3a, la figure 3b et la figure 4 correspondent à un exemple de dispositif robotisé 2. D'autres types de dispositifs robotisés 2 peuvent être utilisés. Sur ces figures, ils correspondent à des bras manipulateurs. Ces bras manipulateurs comportent un effecteur 4 à leur extrémité libre. Les effecteurs 4 représentés sur ces figures correspondent à des pinces de manipulation. Bien entendu, d'autres types d'effecteurs 4 peuvent être utilisés. À titre d'exemples non limitatifs, les effecteurs 4 peuvent correspondre à des pinceaux, des crayons, une caméra 41 (figure 6) ou tout autre effecteur.

De façon non limitative, dans le domaine industriel, le ou les dispositifs robotisés 2 peuvent être configurés pour réaliser du chargement et déchargement de machines-outils, des opérations de nettoyage à la demande, du parachèvement, de l'encollage, de l'inspection qualité, des contrôles non destructifs ciblés, du découpage par laser ou par jet d'eau, du soudage, du montage par bras-transfert (« pick and place » en anglais), de la palettisation ou de l'inspection en milieu hostile ou non.

Par ailleurs, chaque dispositif robotisé 2 peut comprendre un ou plusieurs effecteurs 4 identiques ou différents. De plus, l'ensemble des dispositifs robotisés 2 peuvent comprendre des effecteurs 4 différents entre eux.

Le système d'apprentissage 1 comprend un module de mémorisation 5 d'espace de travail 3. Le module de mémorisation 5 est configuré pour mémoriser des paramètres représentatifs de l'espace de travail 3.

Les paramètres représentatifs de l'espace de travail 3 correspondent à une représentation numérique de l'espace de travail 3. Par exemple, la représentation numérique de l'espace de travail 3 comprend une salle dans laquelle le ou les dispositifs robotisés sont destinés à évoluer ainsi que des éléments 31 contenus dans la salle (figure 6). La pièce à traiter par le ou les dispositifs robotisés 2 peut est comprise dans la représentation numérique de l'espace de travail 3.

Le module de mémorisation 5 peut comprendre une unité de cartographie à trois dimensions embarquée. L'unité de cartographie, disposée dans l'espace de travail 3 permet de réaliser une cartographie de l'espace de travail 3, tout au moins l'enveloppe de l'espace de travail 3.

Le système d'apprentissage 1 comprend également au moins un pointeur 6. Le pointeur 6 ou chacun des pointeurs 6 est associé respectivement à un effecteur 4 d'un dispositif robotisé 2.

Le pointeur 6 ou chacun des pointeurs 6 peut être représentatif de l'effecteur 4 auquel il est associé. Ainsi, le pointeur 6 ou chacun des pointeurs 6 peut être représentatif de l'effecteur 4 auquel il est associé pour au moins une des caractéristiques suivantes : la forme, la masse, le centrage par rapport au dispositif robotisé 2, l'inertie, le ou les matériaux composant l'effecteur 4, l'ergonomie ou toute autre caractéristique pertinente de l'effecteur 4.

Par exemple, si l'effecteur 4 est représentatif d'un pinceau, le pointeur 6 peut être représentatif de la largeur du pinceau. Si l'effecteur 4 est représentatif d'un décapeur laser, le pointeur 6 peut être représentatif de la largeur (ou diamètre) du faisceau laser et de la distance focale relative au système optique du décapeur laser.

Le pointeur 6 ou chacun des pointeurs 6 peut être représentatif d'une ou de fonctions à réaliser par le ou les effecteurs 4 auxquels le pointeur ou chacun des pointeurs 6 est associé. Ainsi, le pointeur 6 ou chacun des pointeurs 6 peut être représentatif d'au moins une des activités suivantes : une activité de calibration, une activité de rétro-ingénierie ou toute autre activité pertinente destinée à être effectuée par l'effecteur 4 ou chacun des effecteurs 4.

La représentation numérique de l'espace de travail 3 peut comprendre une représentation numérique du ou des effecteurs 4 destinés à être utilisés par le dispositif robotisé ou par chacun des dispositifs robotisés 2.

Le pointeur 6 ou chacun des pointeurs 6 est configuré pour être entraîné par au moins un utilisateur 7 selon une trajectoire qui est destinée à être réalisée dans l'espace de travail 3 par l'effecteur 4 ou chacun des effecteurs 4. Dans le cas où le système d'apprentissage 1 comprend plusieurs pointeurs 6, chacun des pointeurs 6 est entraîné selon une trajectoire qui peut être différente de la trajectoire d'un autre des pointeurs 6. De même, lorsque plusieurs pointeurs 6 sont associés à des effecteurs 4 d'un seul dispositif robotisé 2, chacun de ces pointeurs 6 est entraîné selon une trajectoire qui peut être différente de la trajectoire d'un autre des pointeurs 6 du même dispositif robotisé 2.

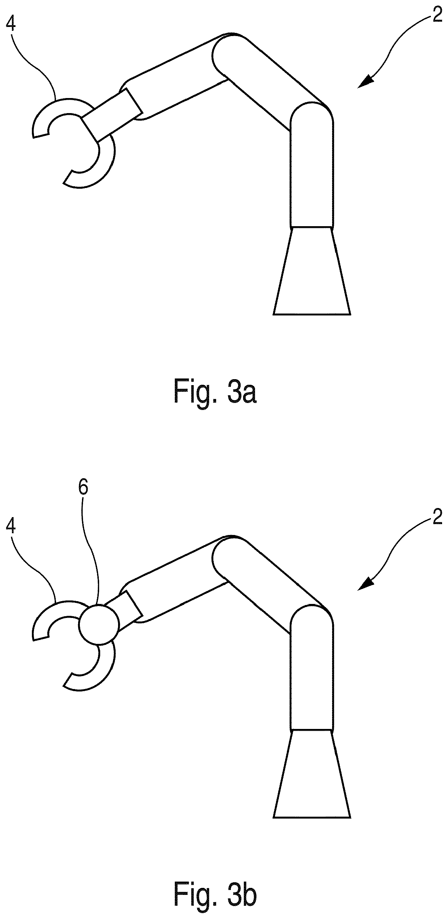

Selon un mode de réalisation (figure 3b), le ou les pointeurs 6 d'un dispositif robotisé 2 peuvent être fixés au voisinage du ou des endroits où le ou les effecteurs 4 sont fixés sur le dispositif robotisé 2. L'utilisateur entraîne donc le ou les pointeurs 6 du dispositif robotisé 2 en entraînant le dispositif robotisé 2 selon la trajectoire qui est destinée à être effectuée par le ou les effecteurs 4.

Selon un autre mode de réalisation, le ou les pointeurs 6 sont fixés sur le dispositif robotisé déjà programmé. Le ou pointeurs 6 sont alors entraînés par le dispositif robotisé déjà programmé en effectuant la trajectoire pour laquelle ce dispositif robotisé est programmé à effectuer. Le dispositif robotisé déjà programmé peut se trouver dans l'espace de travail 3 ou hors de l'espace de travail 3. Par exemple, la trajectoire et les paramètres de la trajectoire mémorisés par le module de capture de trajectoire 8 sont transmis à un module de post-traitement 10 décrit ci-après ou à un module de visualisation de trajectoire 9 par une liaison filaire ou une liaison à distance. De façon non limitative, la liaison à distance peut être une liaison par l'Internet, un protocole de communication permettant l'échange bidirectionnel de données à courte distance (tel que la norme « Bluetooth » ou la norme « Wi-Fi »), ou tout autre protocole de communication sans fil.

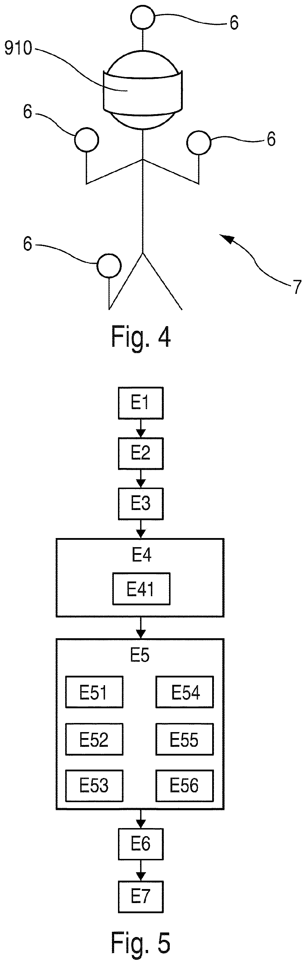

Selon un autre mode de réalisation (figure 4), le ou les pointeurs 6 d'au moins un dispositif robotisé 2 peuvent être portés par l'utilisateur 7. Sur la figure 4, l'utilisateur porte un pointeur 6 sur la tête, un pointeur 6 à chaque main et un pointeur 6 à un pied. L'utilisateur 7 peut alors effectuer une trajectoire différente pour chacun des pointeurs 6. La trajectoire de chacun des pointeurs 6 correspond à la trajectoire que devra effectuer les effecteurs 4 associés. L'utilisateur peut se trouver dans l'espace de travail 3 ou hors de l'espace de travail 3. Par exemple, la trajectoire et les paramètres de la trajectoire mémorisés par le module de capture de trajectoire 8 sont transmis à un module de post-traitement 10 décrit ci-après ou à un module de visualisation de trajectoire 9 par une liaison filaire ou une liaison à distance. De façon non limitative, la liaison à distance peut être une liaison par l'Internet ou un protocole de communication permettant l'échange bidirectionnel de données à courte distance (tel que la norme « Bluetooth » ou la norme « Wi-Fi »), ou tout autre protocole de communication sans fil. Ce mode de réalisation permet de se passer du ou des dispositifs robotisés 2 pour mettre en œuvre le système d'apprentissage 1. Dans ce mode de réalisation, déplacer physiquement le ou les dispositifs robotisés 2 n'est plus nécessaire.

Le système d'apprentissage 1 comprend également un module de capture de trajectoire 8. Le module de capture de trajectoire 8 est configuré pour mémoriser la trajectoire réalisée par le pointeur 6 ou par chacun des pointeurs 6 ainsi que pour mémoriser des paramètres de la trajectoire réalisée par le pointeur 6 ou par chacun des pointeurs 6.

Les paramètres de la trajectoire peuvent comprendre la vitesse du pointeur 6 ou de chacun des pointeurs 6, l'accélération du pointeur 6 ou de chacun des pointeurs 6, etc. D'autres paramètres pertinents de la trajectoire peuvent aussi être mémorisés.

Le fonctionnement du module de capture de trajectoire 8 est avantageusement basé sur une technique de la capture de mouvement. Par exemple, le module de capture de trajectoire 8 peut comprendre au moins un capteur vidéo 81, tel qu'une caméra (figure 6). Ce ou ces capteurs vidéo 81 captent des images des positions que prennent le ou les pointeurs 6 pendant qu'ils sont entraînés. La trajectoire du pointeur 6 ou de chacun des pointeurs 6 est alors déterminée par un traitement des images captées par les capteurs vidéo.

D'autres techniques de capture de mouvement peuvent être utilisées. Par exemple, le ou les pointeurs 6 peuvent comprendre un capteur de mouvement. La trajectoire peut être alors capturée par le module de capture de trajectoire 8 à partir des mouvements détectés par le capteur de mouvement du ou des pointeurs 6. Les mouvements détectés peuvent être transmis au module de capture de trajectoire 8 par communication filaire ou sans fil. Par exemple, les mouvements détectés sont transmis au module de capture de trajectoire 8 par l'Internet ou un protocole de communication permettant l'échange bidirectionnel de données à courte distance (tel que la norme « Bluetooth » ou la norme « Wi-Fi »), ou tout autre protocole de communication sans fil.

Le système d'apprentissage 1 peut également comprendre une interface (non représentée) configuré pour générer des ordres de commande permettant d'activé des axes de déplacement complémentaires lors de la capture de la trajectoire du ou des pointeurs 6. Les axes de déplacements complémentaires peuvent correspondre à l'activation de rail motorisé ou d'actionneurs annexes. Par exemple, l'interface peut activer le déplacement du ou des dispositifs robotisés 2 pendant la capture de la trajectoire du ou des pointeurs 6. À titre d'exemple, le ou les dispositifs robotisés 2 peuvent être installés sur au moins un rail autorisant le déplacement du ou des dispositifs robotisés 2 le long du ou des rails. L'interface permet de commander le déplacement du ou des dispositifs robotisés 2 le long du ou des rails. L'interface peut comprendre un moyen de saisie permettant à un utilisateur de commander la génération d'ordre de commande par l'interface pour activer un ou plusieurs axes de déplacements complémentaires pendant la capture de la trajectoire du ou des pointeurs 6.

Avantageusement, le système d'apprentissage 1 peut comprendre également un module de visualisation de la trajectoire 9. Le module de visualisation de la trajectoire 9 est configuré pour visualiser la trajectoire réalisée par le pointeur 6 ou par chacun des pointeurs 6 par rapport aux paramètres représentatifs de l'espace de travail 3.

Selon un mode de réalisation, le module de visualisation de la trajectoire 9 peut être configuré pour visualiser la trajectoire en temps réel.

Selon un autre mode de réalisation, le module de visualisation de la trajectoire 9 peut être configuré pour visualiser la trajectoire en temps différé.

Selon un premier mode de réalisation, le module de visualisation de trajectoire 9 comprend un sous-module de simulation en réalité augmentée 91. Le sous-module de simulation 91 en réalité augmentée peut comprendre un casque 910 destiné à être porté par l'utilisateur 7 afin que l'utilisateur 7 visualise les mouvements du ou des dispositifs robotisés 2 dans l'espace de travail 3 lorsqu'il entraîne le ou les pointeurs 6 selon des trajectoires, comme représenté sur la figure 4. Le sous-module de simulation 91 peut comprendre une caméra montée dans l'espace de travail 3 pour que l'utilisateur 7 puisse visualiser les trajectoires dans l'espace de travail 3. Ce mode de réalisation est avantageusement utilisé quand l'utilisateur 7 ne se trouve pas dans l'espace de travail 3.

Selon un deuxième mode de réalisation, le module de visualisation 9 comprend un sous-module d'alerte 92. Le sous-module d'alerte 92 est configuré pour alerter l'utilisateur 7 d'une trajectoire incompatible du pointeur 6 ou d'au moins un des pointeurs 6. La trajectoire peut être incompatible si le ou les degrés de liberté du ou des dispositifs robotisés 2 ne permettent pas une réalisation de ladite trajectoire par le ou les effecteurs 4 auxquels le ou les pointeurs 6 sont associés. La trajectoire peut également être incompatible par rapport aux paramètres représentatifs de l'espace de travail 3 dans lequel le ou les dispositifs robotisés 2 sont destinés à évoluer si la trajectoire entre en collision avec un élément 31 de l'espace de travail 3.

Selon un troisième mode de réalisation, le module de visualisation 9 comprend un écran d'affichage qui est destiné à afficher les mouvements du ou des dispositifs robotisés 2 dans l'espace de travail 3.

Ce sous-module d'alerte 92 permet d'informer l'utilisateur 7 que le mouvement nécessaire pour le ou les dispositifs robotisés 2 d'accomplir la trajectoire du ou des effecteurs 4 entre dans une zone d'alerte dans laquelle la trajectoire n'est pas techniquement réalisable par le ou les dispositifs robotisés 2. Ce sous-module d'alerte 92 peut également informer l'utilisateur 7 que la trajectoire du ou des effecteurs 4 peut entrer dans une zone d'alerte dans laquelle la trajectoire entre en collision avec un élément 31 de l'espace de travail 3. Pour que l'alerte soit donnée à l'utilisateur 7, le sous-module d'alerte 92 peut comprendre une unité d'alerte visuelle et/ou une unité d'alerte haptique et/ou une unité acoustique.

L'unité visuelle peut comprendre un dispositif lumineux pouvant émettre un signal lumineux pour donner l'alerte à l'utilisateur 7. Par exemple, le dispositif lumineux émet un signal lumineux vert lorsque la trajectoire est éloignée de la zone d'alerte. Le dispositif lumineux émet un signal lumineux orange pour indiquer à l'utilisateur 7 que la trajectoire s'approche de la zone d'alerte. Le dispositif lumineux émet un signal lumineux rouge pour indiquer à l'utilisateur 7 que la trajectoire est entrée dans la zone d'alerte.

L'unité haptique peut comprend un élément vibrant qui génère une vibration pour donner l'alerte à l'utilisateur 7. Par exemple, la vibration est modulée en fonction de l'éloignement par rapport à la zone d'alerte. De façon non limitative, la vibration peut avoir une fréquence qui augmente au fur et à mesure que la trajectoire s'approche de la zone d'alerte.

L'unité acoustique peut comprendre un élément sonore qui émet un son pour donner l'alerte à l'utilisateur 7. Par exemple, le son est modulé en fonction de l'éloignement par rapport à la zone d'alerte. De façon non limitative, la vibration peut avoir un volume qui augmente au fur et à mesure que la trajectoire s'approche de la zone d'alerte.

Le système d'apprentissage 1 comprend aussi un module de post-traitement 10.

Le module de post-traitement 10 est configuré pour déterminer pour chacun des dispositifs robotisés 2 une trajectoire compatible du ou des effecteurs 4 avec le ou les degrés de liberté de mouvement de chacun des dispositifs robotisés 2 à partir de la trajectoire réalisée par le pointeur 6 ou par chacun des pointeurs 6 mémorisée par le module de capture de trajectoire 8. Le module de post-traitement 10 est également configuré pour déterminer pour chacun des dispositifs robotisés 2 des paramètres compatibles de ladite trajectoire compatible de l'effecteur 4 à partir des paramètres mémorisés par le module de capture de trajectoire 8.

Selon un premier mode de réalisation, le module de post-traitement 10 comprend un sous-module d'affichage 101 configuré pour afficher des points de la trajectoire réalisée par le pointeur 6 ou par chacun des pointeurs 6 et mémorisée par le module de capture de trajectoire 8, un sous-module d'affichage 102 configuré pour afficher l'espace de travail 3 à partir des paramètres représentatifs de l'espace de travail 3 mémorisés par le module de mémorisation 5 et un sous-module d'affichage 103 configuré pour afficher les paramètres de la trajectoire réalisée par le pointeur 6 ou par chacun des pointeurs 6 et mémorisés par le module de capture de trajectoire 8. Les paramètres peuvent être affichés sous forme numérique ou graphique. Le module de post-traitement 10 comprend en outre un sous-module de saisie 104 configuré pour permettre à un utilisateur 7 de modifier des points de la trajectoire mémorisée par le module de capture de trajectoire 8 et/ou modifier les paramètres de la trajectoire mémorisés par le module de capture de trajectoire 8 pour obtenir ladite trajectoire compatible pour l'effecteur 4 ou pour chacun des effecteurs 4 du dispositif robotisé 2 ou de chacun des dispositifs robotisés 2 et/ou lesdits paramètres compatibles. Ces sous-modules 101, 102, 103 et 104 donnent ainsi la possibilité à l'utilisateur 7 d'éditer les points de la trajectoire réalisée par le pointeur 6 ou par chacun des pointeurs 6 ainsi que les paramètres de la trajectoire réalisée par le pointeur 6 ou par chacun des pointeurs 6. L'utilisateur 7 peut alors modifier des points de la trajectoire ainsi que des paramètres de la trajectoire afin que cette trajectoire et ces paramètres soient compatibles.

Selon un deuxième mode de réalisation, le module de post-traitement 10 comprend un sous-module de simulation 105. Le sous-module de simulation est configuré pour simuler ladite trajectoire compatible de l'effecteur 4 ou de chacun des effecteurs 4 du dispositif robotisé 2 ou des dispositifs robotisés 2 ainsi que l'espace de travail 3 à partir des paramètres représentatifs de l'espace de travail 3. Le sous-module de simulation 105 peut comprendre une unité de simulation en réalité augmentée 1051 ou un écran d'affichage. Le sous-module de simulation 105 peut comprendre une caméra montée dans l'espace de travail 3 pour que l'utilisateur 7 puisse visualiser les trajectoires compatibles dans l'espace de travail 3 ainsi que les mouvements effectués par le dispositif robotisé 2 pour effectuer les trajectoires compatibles.

Selon une variante du deuxième mode de réalisation (figure 4), la caméra peut être pilotée par un pointeur 6 fixé sur la tête de l'utilisateur 7. Des ordres de commande sont envoyés à la caméra à partir des mouvements du pointeur qui suivent les mouvements de la tête sur laquelle il est fixé. L'utilisateur 7 peut également porter un casque 910 qui permet à l'utilisateur 7 de visualiser les trajectoires compatibles dans l'espace de travail 3 ainsi que les mouvements effectués par le dispositif robotisé 2 pour effectuer les trajectoires compatibles grâce à un retour d'informations visuelles issues de la caméra.

Selon un troisième mode de réalisation, le module de post-traitement 10 comprend un sous-module de reproduction 106. Le sous-module de reproduction 106 est configuré pour transmettre au dispositif robotisé 2 ou aux dispositifs robotisés 2 des ordres de commande représentatifs de la trajectoire du pointeur 6 ou de chacun des pointeurs 6, pour que le ou les effecteurs 4 du dispositif robotisé 2 ou de chacun des dispositifs robotisés 2 reproduisent de façon simultanée la trajectoire du pointeur 6 ou de chacun des pointeurs 6 entraînés par le ou les utilisateurs 7. Ce mode permet ainsi d'obtenir ladite trajectoire compatible pour l'effecteur 4 ou pour chacun des effecteurs 4 du dispositif robotisé 2 ou de chacun des dispositifs robotisés 2 et/ou lesdits paramètres compatibles. Ce mode de réalisation est aussi avantageusement utilisé quand l'utilisateur 7 ne se trouve pas dans l'espace de travail 3.

Le premier mode de réalisation, le deuxième mode de réalisation et le troisième mode de réalisation peuvent être combinés. Ainsi, lorsque l'utilisateur modifie les points de la trajectoire et/ou modifie les paramètres de la trajectoire, il peut vérifier ces modifications en les visualisant grâce au sous-module de visualisation 104 avant de valider ces modifications.

Le système d'apprentissage 1 comprend également un module de sauvegarde 11. Le module de sauvegarde 11 est configuré pour sauvegarder la trajectoire compatible et les paramètres compatibles du dispositif robotisé 2 ou de chacun des dispositifs robotisés 2. La sauvegarde peut être réalisée après une validation par l'utilisateur 7.

Le système d'apprentissage 1 comprend aussi un module de génération de programme 12. Le module de génération de programme 12 est configuré pour générer et sauvegarder un programme à partir de la trajectoire compatible et des paramètres compatibles sauvegardés par le module de sauvegarde 11. Le programme généré présente un langage compatible avec un langage permettant une mise en mouvement du ou des dispositifs robotisés 2. Ainsi, à partir du type de ou des dispositifs robotisés 2 utilisés, le module de génération de programme 12 traduit des données représentatives de la trajectoire compatible et des paramètres compatibles sauvegardées par le module de sauvegarde 11 vers un programme présentant un langage compatible avec le ou les dispositifs robotisés 2 devant effectuer la trajectoire. Le type de ou des dispositifs robotisés 2 peut être saisi par le ou les utilisateurs 7 pour être fourni au module de génération de programme 12. Le type de ou des dispositifs robotisés 2 peut aussi être fourni par un signal représentatif du type de ou des dispositifs robotisés 2 transmis par le ou les dispositifs robotisés 2 au module de génération de programme 12.

Le système d'apprentissage 1 peut être utilisé dans un système robotisé S dans un espace de travail 3.

Ce système robotisé S comprend au moins un dispositif robotisé 2 équipé d'au moins un effecteur 4 et présentant au moins un degré de liberté de mouvement. Le système robotisé comprend le système d'apprentissage 1 et un module d'exécution 13 configuré pour faire exécuter par le dispositif robotisé 2 ou par chacun des dispositifs robotisés 2 la trajectoire compatible sauvegardée par le module de sauvegarde 11 selon les paramètres compatibles sauvegardés par le module de sauvegarde 11. Le module d'exécution 13 exécute le programme généré par le module de génération de programme 12.

Le système d'apprentissage 1 de mouvement propose ainsi une approche nouvelle de la programmation reposant sur le geste technique capturé. La programmation se fait par capture du geste technique réel, et sous la supervision du système d'apprentissage 1, qui veille à éviter les incompatibilités et les interactions non souhaitées entre le ou les dispositifs robotisés et leur environnement (pendant la programmation et pendant l'exécution). Le système d'apprentissage 1 permet de plus un fonctionnement synchrone ou asynchrone du système robotisé, local ou déporte, en lien avec le geste technique capturé. Contrairement à la programmation hors ligne (des robots, via logiciel), le geste technique réel sera ici capturé et mis en œuvre fidèlement avec le système d'apprentissage 1, ainsi que l'ensemble des paramètres associés appliqués par un utilisateur, humain ou non. La programmation hors ligne traditionnelle et existante ne permet pas cela et ne permet qu'une approximation de ce geste technique qui devra ensuite être affiné par des essais, sans jamais être le geste réel pour autant.

L'invention concerne également un procédé d'apprentissage de mouvement (figure 5). Le procédé d'apprentissage est destiné à programmer au moins un dispositif robotisé 2 équipé d'au moins un effecteur 4 et présentant au moins un degré de liberté de mouvement.

Le procédé d'apprentissage comprend au moins les étapes suivantes :
- une étape E1 de mémorisation, mise en œuvre par le module de mémorisation 5 d'espace de travail 3, consistant à mémoriser des paramètres représentatifs de l'espace de travail 3 dans lequel le ou les dispositifs robotisés 2 sont destinés à évoluer ;
- au moins une étape E2 d'entraînement d'au moins un pointeur 6, mise en œuvre par au moins un utilisateur 7, le ou les utilisateurs 7 entraînant au moins un pointeur 6 associé respectivement à un effecteur 4 d'un dispositif robotisé 2, le pointeur 6 ou chacun des pointeurs 6 étant entraîné par le ou les utilisateurs 7 selon une trajectoire qui est destinée à être réalisée dans l'espace de travail 3 par l'effecteur 4 ou par chacun des effecteurs 4 ;
- une étape E3 de capture de trajectoire, mise en œuvre par le module de capture de trajectoire 8, consistant à mémoriser la trajectoire réalisée par le pointeur 6 ou par chacun des pointeurs 6 ainsi que pour mémoriser des paramètres de la trajectoire réalisée par le pointeur 6 ou par chacun des pointeurs 6, le pointeur 6 ou chacun des pointeurs 6 étant représentatif d'une ou de fonctions à réaliser du ou des effecteurs 4 auxquels le pointeur 6 ou chacun des pointeurs 6 est associé ;
- une étape E6 de sauvegarde, mise en œuvre par le module de sauvegarde 11, consistant à sauvegarder la trajectoire compatible et les paramètres compatibles du dispositif robotisé 2 ou de chacun des dispositifs robotisés 2.

Avantageusement, le procédé d'apprentissage comprend aussi une étape E7 de génération de programme, mise en œuvre par le module de génération de programme 12, consistant à générer et à sauvegarder un programme à partir de la trajectoire compatible et des paramètres compatibles sauvegardés par le module de sauvegarde 11. Le programme présente un langage compatible avec un langage permettant une mise en mouvement du ou des dispositifs robotisés 2.

Avantageusement, le procédé d'apprentissage comprend une étape E4 de visualisation de la trajectoire, mise en œuvre par le module de visualisation de la trajectoire 9, consistant à visualiser la trajectoire réalisée par le pointeur 6 ou par chacun des pointeurs 6 par rapport aux paramètres représentatifs de l'espace de travail 3.

Selon un mode de réalisation, l'étape E4 de visualisation de la trajectoire peut être réalisée en temps réel, c'est-à-dire, l'étape E4 de visualisation de la trajectoire peut être exécutée simultanément à l'exécution de l'étape E3 de capture de la trajectoire.

Selon un autre mode de réalisation, l'étape E4 de visualisation de la trajectoire peut être réalisée en temps différé, c'est-à-dire, l'étape E4 de visualisation de la trajectoire peut être exécutée après ou en décalage par rapport à l'exécution de l'étape E3 de capture de la trajectoire.

L'étape E5 de post-traitement consiste à déterminer pour chacun des dispositifs robotisés 2 :
- une trajectoire compatible du ou des effecteurs 4 avec le ou les degrés de liberté de mouvement du dispositif robotisé 2 ou de chacun des dispositifs robotisés 2 à partir de la trajectoire réalisée par le pointeur 6 ou par chacun des pointeurs 6 mémorisée dans l'étape E3 de capture de trajectoire et
- des paramètres compatibles de ladite trajectoire compatible du ou des effecteurs 4 à partir des paramètres mémorisés dans l'étape E3 de capture de trajectoire.

L'étape E5 de post-traitement peut comprendre :
- une sous-étape E51 d'affichage, mise en œuvre par le sous-module d'affichage 101, consistant à afficher des points de la trajectoire réalisée par le pointeur 6 ou par chacun des pointeurs 6 ;
- une sous-étape E52 d'affichage, mise en œuvre par le sous-module d'affichage 102, consistant à afficher l'espace de travail à partir des paramètres représentatifs de l'espace de travail mémorisés à l'étape E1 de mémorisation ;
- une sous-étape d'affichage E53, mise en œuvre par un sous-module d'affichage 103, consistant à afficher les paramètres de la trajectoire réalisée par le pointeur 6 ou par chacun des pointeurs 6 ;
- une sous-étape E54 de saisie, mise en œuvre par le sous-module de saisie 104, consistant à permettre à un utilisateur 7 de modifier des points de la trajectoire mémorisée dans l'étape E3 de capture de trajectoire et/ou modifier les paramètres de la trajectoire mémorisés dans l'étape E3 de capture de trajectoire pour obtenir ladite trajectoire compatible pour l'effecteur 4 ou pour chacun des effecteurs 4 du dispositif robotisé 2 ou de chacun des dispositifs robotisés 2 et/ou lesdits paramètres compatibles.

L'étape E5 de post-traitement peut aussi comprendre une sous-étape E55 de simulation, mise en œuvre par le sous-module de simulation 105, consistant à simuler ladite trajectoire compatible de l'effecteur 4 ou de chacun des effecteurs 4 du dispositif robotisé 2 ou de chacun des dispositifs robotisés 2 ainsi que l'espace de travail 3 à partir des paramètres représentatifs de l'espace de travail 3.

L'étape E5 de post-traitement peut comprendre une sous-étape E56 de reproduction, mise en œuvre par le sous-module de reproduction 106, consistant à transmettre au dispositif robotisé 2 ou aux dispositifs robotisés 2 des ordres de commande représentatifs de la trajectoire du pointeur 6 ou de chacun des pointeurs 6, pour que le ou les effecteurs 4 du dispositif robotisé 2 ou de chacun des dispositifs robotisés 2 reproduisent de façon simultanée la trajectoire du pointeur 6 ou de chacun des pointeurs 6 entraîné par le ou les utilisateurs (7), pour obtenir ladite trajectoire compatible pour l'effecteur (4) ou pour chacun des effecteurs (4) du dispositif robotisé (2) ou de chacun des dispositifs robotisés (2) et/ou lesdits paramètres compatibles.

L'étape E4 de visualisation peut également comprendre une sous-étape E41 d'alerte, mise en œuvre par le sous-module d'alerte 92, consistant à alerter l'utilisateur 7 d'une trajectoire incompatible du pointeur 6 ou d'au moins un des pointeurs 6, la trajectoire étant incompatible si le ou les degrés de liberté du ou des dispositifs robotisés 2 ne permettent pas une réalisation de ladite trajectoire par le ou les dispositifs robotisés 2 auxquels le ou les pointeurs 6 sont associés.

La sous-étape E41 d'alerte peut également consister à alerter l'utilisateur 7 d'une trajectoire incompatible du pointeur 6 ou d'au moins un des pointeurs 6 par rapport aux paramètres représentatifs de l'espace de travail 3 dans lequel le ou les dispositifs robotisés 2 sont destinés à évoluer.

Comme dit au début de la description, le système d'apprentissage 1 peut être utilisé dans le domaine industriel ou dans le domaine du divertissement.

À titre d'exemple dans le domaine du divertissement, le système d'apprentissage 1 peut être utilisé pour jouer au tennis à distance. Un système robotisé 2 muni d'une raquette, correspondant à un effecteur, peut être situé sur un terrain de tennis. Un utilisateur 7 muni d'un pointeur 6 représentatif de la raquette ou bien une raquette équipée d'un pointeur 6 est situé hors du terrain de tennis. Une caméra permet à l'utilisateur de visualiser le terrain de tennis à l'aide d'un casque 910. Le mouvement du pointeur 6 représentatif de la raquette ou la raquette équipée du pointeur 6 peut alors être reproduit par la raquette du dispositif robotisé 2 grâce au système d'apprentissage 1.

À titre d'exemple, dans le domaine industriel, le système d'apprentissage 1 peut être utilisé pour une inspection à distance dans une installation nucléaire, telle qu'une centrale nucléaire. Un dispositif robotisé 2 mobile est, par exemple, équipé d'une caméra et d'un effecteur. Un utilisateur 7 peut être muni d'un pointeur permettant de piloter les mouvements de la caméra, d'un pointeur permettant de piloter le bras équipé de l'effecteur et d'une interface permettant de générer des ordres de commande permettant de déplacer le dispositif robotisé 2.

## Revendications

1. Système d'apprentissage de mouvement pour programmer au moins un dispositif robotisé (2) équipé d'au moins un effecteur (4) et présentant au moins un degré de liberté de mouvement, le ou les dispositifs robotisés (2) étant destinés à évoluer dans un espace de travail (3),
**caractérisé en ce qu'**il comprend :
- un module de mémorisation (5) d'espace de travail (3), configuré pour mémoriser des paramètres représentatifs de l'espace de travail (3) ;
- au moins un pointeur (6), le pointeur (6) ou chacun des pointeurs (6) étant associé respectivement à un effecteur (4) d'un dispositif robotisé (2), le pointeur (6) ou chacun des pointeurs (6) étant configuré pour être entraîné par au moins un utilisateur (7) selon une trajectoire qui est destinée à être réalisée dans l'espace de travail (3) par l'effecteur (4) ou chacun des effecteurs (4), le pointeur (6) ou chacun des pointeurs (6) étant représentatif d'une ou de fonctions à réaliser par le ou les effecteurs (4) auxquels le pointeur (6) ou chacun des pointeurs (6) est associé ;
- un module de capture de trajectoire (8) configuré pour mémoriser la trajectoire réalisée par le pointeur (6) ou par chacun des pointeurs (6) ainsi que pour mémoriser des paramètres de la trajectoire réalisée par le pointeur (6) ou par chacun des pointeurs (6) ;
- un module de post-traitement (10), configuré pour déterminer pour chacun des dispositifs robotisés (2) :
• une trajectoire compatible du ou des effecteurs (4) avec le ou les degrés de liberté de mouvement du dispositif robotisé (2) ou de chacun des dispositifs robotisés (2) à partir de la trajectoire réalisée par le pointeur (6) ou par chacun des pointeurs (6) mémorisée par le module de capture de trajectoire (8) et
• des paramètres compatibles de ladite trajectoire compatible du ou des l'effecteurs (4) à partir des paramètres mémorisés par le module de capture de trajectoire (8) ;
- un module de sauvegarde (11), configuré pour sauvegarder la trajectoire compatible et les paramètres compatibles du dispositif robotisé (2) ou de chacun des dispositifs robotisés (2).

2. Système selon la revendication 1,
**caractérisé en ce qu'**il comprend en outre un module de génération de programme (12), configuré pour générer et sauvegarder un programme à partir de la trajectoire compatible et des paramètres compatibles sauvegardés par le module de sauvegarde (11), le programme présentant un langage compatible avec un langage permettant une mise en mouvement du ou des dispositifs robotisés (2).

3. Système selon l'une quelconque des revendications 1 et 2,
**caractérisé en ce qu'**il comprend en outre un module de visualisation de la trajectoire (9), configuré pour visualiser la trajectoire réalisée par le pointeur (6) ou par chacun des pointeurs (6) par rapport aux paramètres représentatifs de l'espace de travail (3).

4. Système selon l'une quelconque des revendications 1 à 3,
**caractérisé en ce que** le module de post-traitement (10) comprend :
- un premier sous-module d'affichage (101), configuré pour afficher des points de la trajectoire réalisée par le pointeur (6) ou par chacun des pointeurs (6) et mémorisée par le module de capture de trajectoire (8) ;
- un deuxième sous-module d'affichage (102), configuré pour afficher l'espace de travail (3) à partir des paramètres représentatifs de l'espace de travail (3) mémorisés par le module de mémorisation (5) ;
- un troisième sous-module d'affichage (103), configuré pour afficher les paramètres de la trajectoire réalisée par le pointeur (6) ou par chacun des pointeurs (6) et mémorisés par le module de capture de trajectoire (8) ;
- un sous-module de saisie (104), configuré pour permettre à un utilisateur (7) de modifier des points de la trajectoire mémorisée par le module de capture de trajectoire (8) et/ou modifier les paramètres de la trajectoire mémorisés par le module de capture de trajectoire (8) pour obtenir ladite trajectoire compatible pour l'effecteur (4) ou pour chacun des effecteurs (4) du dispositif robotisé (2) ou de chacun des dispositifs robotisés (2) et/ou lesdits paramètres compatibles.

5. Système selon l'une quelconque des revendications 1 à 4,
**caractérisé en ce que** le module de post-traitement (10) comprend un sous-module de simulation (105), configuré pour simuler ladite trajectoire compatible de l'effecteur (4) ou de chacun des effecteurs (4) du dispositif robotisé (2) ou des dispositifs robotisés (2) ainsi que l'espace de travail (3) à partir des paramètres représentatifs de l'espace de travail (3).

6. Système selon la revendication 5,
**caractérisé en ce que** le sous-module de simulation (105) comprend une unité de simulation en réalité augmentée (1051).

7. Système selon l'une quelconque des revendications 1 à 6,
**caractérisé en ce que** le module de post-traitement (10) comprend un sous-module de reproduction (106), configuré pour transmettre au dispositif robotisé (2) ou aux dispositifs robotisés (2) des ordres de commande représentatifs de la trajectoire du pointeur (6) ou de chacun des pointeurs (6), pour que le ou les effecteurs (4) du dispositif robotisé (2) ou de chacun des dispositifs robotisés (2) reproduisent de façon simultanée la trajectoire du pointeur (6) ou de chacun des pointeurs (6) entraîné par le ou les utilisateurs (7), pour obtenir ladite trajectoire compatible pour l'effecteur (4) ou pour chacun des effecteurs (4) du dispositif robotisé (2) ou de chacun des dispositifs robotisés (2) et/ou lesdits paramètres compatibles.

8. Système selon l'une quelconque des revendications 3 à 7,
**caractérisé en ce que** le module de visualisation (9) comprend un sous-module de simulation en réalité augmentée (91).

9. Système selon l'une quelconque des revendications 3 à 8,
**caractérisé en ce que** le module de visualisation (9) comprend un sous-module d'alerte (92), configuré pour alerter l'utilisateur (7) d'une trajectoire incompatible du pointeur (6) ou d'au moins un des pointeurs (6), la trajectoire étant incompatible si le ou les degrés de liberté du ou des dispositifs robotisés (2) ne permettent pas une réalisation de ladite trajectoire par le ou les effecteurs (4) auxquels le ou les pointeurs (6) sont associés.

10. Système selon la revendication 9,
**caractérisé en ce que** le sous-module d'alerte (92) est configuré pour alerter l'utilisateur d'une trajectoire incompatible du pointeur (6) ou d'au moins un des pointeurs (6) par rapport aux paramètres représentatifs de l'espace de travail (3) dans lequel le ou les dispositifs robotisés (2) sont destinés à évoluer.

11. Système robotisé,
**caractérisé en ce qu'**il comprend :
- au moins un dispositif robotisé (2) équipé d'au moins un effecteur (4) et présentant au moins un degré de liberté de mouvement,
- un système d'apprentissage (1) selon l'une quelconque des revendications 1 à 10,
- un module d'exécution (13), configuré pour faire exécuter par le dispositif robotisé (2) ou par chacun des dispositifs robotisés (2) la trajectoire compatible et les paramètres compatibles sauvegardés par le module de sauvegarde (11).

12. Procédé d'apprentissage de mouvement pour programmer au moins un dispositif robotisé (2) équipé d'au moins un effecteur (4) et présentant au moins un degré de liberté de mouvement, le ou les dispositifs robotisés (2) étant destinés à évoluer dans un espace de travail (3),
**caractérisé en ce qu'**il comprend les étapes suivantes :
- une étape (E1) de mémorisation, mise en œuvre par un module de mémorisation (5) d'espace de travail (3), consistant à mémoriser des paramètres représentatifs de l'espace de travail (3) dans lequel le ou les dispositifs robotisés (2) sont destinés à évoluer ;
- au moins une étape (E2) d'entraînement d'au moins un pointeur (6), mise en œuvre par au moins un utilisateur (7), le ou les utilisateurs (7) entraînant au moins un pointeur (6) associé respectivement à un effecteur (4) d'un dispositif robotisé (2), le pointeur (6) ou chacun des pointeurs (6) étant entraîné par le ou les utilisateurs (7) selon une trajectoire qui est destinée à être réalisée dans l'espace de travail (3) par l'effecteur (4) ou par chacun des effecteurs (4), le pointeur (6) ou chacun des pointeurs (6) étant représentatif d'une ou de fonctions à réaliser du ou des effecteurs (4) auxquels le pointeur (6) ou chacun des pointeurs (6) est associé ;
- une étape (E3) de capture de trajectoire, mise en œuvre par un module de capture de trajectoire (8), consistant à mémoriser la trajectoire réalisée par le pointeur (6) ou par chacun des pointeurs (6) ainsi que pour mémoriser des paramètres de la trajectoire réalisée par le pointeur (6) ou par chacun des pointeurs (6) ;
- une étape (E5) de post-traitement, mise en œuvre par un module de post-traitement (10), consistant à déterminer pour chacun des dispositifs robotisés (2) :
• une trajectoire compatible du ou des effecteurs (4) avec le ou les degrés de liberté de mouvement du dispositif robotisé (2) ou de chacun des dispositifs robotisés (2) à partir de la trajectoire réalisée par le pointeur (6) ou par chacun des pointeurs (6) mémorisée dans l'étape (E3) de capture de trajectoire et
• des paramètres compatibles de ladite trajectoire compatible du ou des effecteurs (4) à partir des paramètres mémorisés dans l'étape (E3) de capture de trajectoire ;
- une étape (E6) de sauvegarde, mise en œuvre par un module de sauvegarde (11), consistant à sauvegarder la trajectoire compatible et les paramètres compatibles du dispositif robotisé (2) ou de chacun des dispositifs robotisés (2).

13. Procédé selon la revendication 12,
**caractérisé en ce qu'**il comprend en outre une étape (E7) de génération de programme, mise en œuvre par un module de génération de programme (12), consistant à générer et à sauvegarder un programme à partir de la trajectoire compatible et des paramètres compatibles sauvegardés par le module de sauvegarde (11), le programme présentant un langage compatible avec un langage permettant une mise en mouvement du ou des dispositifs robotisés (2).

14. Procédé selon l'une quelconque des revendications 12 et 13, **caractérisé en ce qu'**il comprend une étape (E4) de visualisation de la trajectoire, mise en œuvre par un module de visualisation de la trajectoire (9), consistant à visualiser la trajectoire réalisée par le pointeur (6) ou par chacun des pointeurs (6) par rapport aux paramètres représentatifs de l'espace de travail (3).

15. Procédé selon l'une quelconque des revendications 12 à 14,
**caractérisé en ce que** l'étape (E5) de post-traitement comprend :
- une première sous-étape (E51) d'affichage, mise en œuvre par un premier sous-module d'affichage (101), consistant à afficher des points de la trajectoire réalisée par le pointeur (6) ou par chacun des pointeurs (6) ;
- une deuxième sous-étape (E52) d'affichage, mise en œuvre par un deuxième sous-module d'affichage (102), consistant à afficher l'espace de travail (3) à partir des paramètres représentatifs de l'espace de travail (3) mémorisés à l'étape (E1) de mémorisation ;
- une troisième sous-étape (E53) d'affichage, mise en œuvre par un deuxième sous-module d'affichage (103), consistant à afficher les paramètres de la trajectoire réalisée par le pointeur (6) ou par chacun des pointeurs (6) ;
- une sous-étape (E54) de saisie, mise en œuvre par un sous-module de saisie (104), consistant à permettre à un utilisateur (7) de modifier des points de la trajectoire mémorisée dans l'étape (E3) de capture de trajectoire et/ou modifier les paramètres de la trajectoire mémorisés dans l'étape (E3) de capture de trajectoire pour obtenir ladite trajectoire compatible pour l'effecteur (4) ou pour chacun des effecteurs (4) du dispositif robotisé (2) ou de chacun des dispositifs robotisés (2) et/ou lesdits paramètres compatibles.

16. Procédé selon l'une quelconque des revendications 12 à 15,
**caractérisé en ce que** l'étape (E5) de post-traitement comprend une sous-étape (E55) de simulation, mise en œuvre par un sous-module de simulation (105), consistant à simuler ladite trajectoire compatible de l'effecteur (4) ou de chacun des effecteurs (4) du dispositif robotisé (2) ou des dispositifs robotisés (2) ainsi que l'espace de travail (3) à partir des paramètres représentatifs de l'espace de travail (3).

17. Procédé selon l'une quelconque des revendications 12 à 16,
**caractérisé en ce que** l'étape (E5) de post-traitement comprend une sous-étape (E56) de reproduction, mise en œuvre par un sous-module de reproduction (106), consistant à transmettre au dispositif robotisé (2) ou aux dispositifs robotisés (2) des ordres de commande représentatifs de la trajectoire du pointeur (6) ou de chacun des pointeurs (6), pour que le ou les effecteurs (4) du dispositif robotisé (2) ou de chacun des dispositifs robotisés (2) reproduisent de façon simultanée la trajectoire du pointeur (6) ou de chacun des pointeurs (6) entraîné par le ou les utilisateur (7), pour obtenir ladite trajectoire compatible pour l'effecteur (4) ou pour chacun des effecteurs (4) du dispositif robotisé (2) ou de chacun des dispositifs robotisés (2) et/ou lesdits paramètres compatibles.

18. Procédé selon l'une quelconque des revendications 14 à 17,
**caractérisé en ce que** l'étape (E4) de visualisation comprend une sous-étape (E41) d'alerte, mise en œuvre par un sous-module d'alerte (92), consistant à alerter l'utilisateur (7) d'une trajectoire incompatible du pointeur (6) ou d'au moins un des pointeurs (6), la trajectoire étant incompatible si le ou les degrés de liberté du ou des dispositifs robotisés (2) ne permettent pas une réalisation de ladite trajectoire par le ou les dispositifs robotisés (2) auxquels le ou les pointeur (6) sont associés.

19. Procédé selon l'une quelconque des revendications 12 à 18,
**caractérisé en ce que** la sous-étape (E41) d'alerte consiste à alerter l'utilisateur (7) d'une trajectoire incompatible du pointeur (6) ou d'au moins un des pointeurs (6) par rapport aux paramètres représentatifs de l'espace de travail (3) dans lequel le ou les dispositifs robotisés (2) sont destinés à évoluer.
